# EUROPÄISCHE PATENTSCHRIFT

(11) **EP 2 582 889 B1**
(45) Veröffentlichungstag und Bekanntmachung des Hinweises auf die Patenterteilung: **23.09.2015**
(21) Anmeldenummer: 11727922.4
(22) Anmeldetag: 17.06.2011
(51) Int. Cl.: E03C 1/04, F16L 27/047, F16L 37/088

(54) **WASSERAUSLAUF-GARNITUR MIT KUGELGELENK**
WATER OUTLET FITTING WITH A BALL-AND-SOCKET JOINT
ROBINETTERIE DE DISTRIBUTION D'EAU À ROTULE

(30) Priorität: 14.03.2011 US 201113047107; 03.03.2011 DE 202011003476 U; 18.06.2010 US 818666
(43) Veröffentlichungstag der Anmeldung: 24.04.2013
(73) Patentinhaber: Neoperl GmbH, 79379 Müllheim (DE)
(72) Erfinder: GRETHER, Hermann, 79379 Müllheim (DE); WEIS, Christoph, 79379 Müllheim (DE); REINHARDT, Holger, 79232 March/Buchheim (DE)
(74) Vertreter: Börjes-Pestalozza, Henrich
(86) Internationale Anmeldenummer: PCT/EP2011/003009
(87) Internationale Veröffentlichungsnummer: WO 2011/157441

(56) Entgegenhaltungen:
- EP-A1- 0 441 686
- WO-A1-2004/007854
- WO-A1-2008/067879
- WO-A2-2007/090311
- DE-A1- 3 133 267
- DE-U1-202006 010 072
- US-A1- 2005 156 062

## Beschreibung

Die Erfindung betrifft eine Wasserauslauf-Garnitur mit einem handhabbaren Wasserauslauf sowie mit einer flexiblen Schlauchleitung, die über eine Kupplung mit dem Wasserauslauf verbindbar ist, die ein Kugelgelenk aufweist, das ein erstes und ein zweites Gelenkteil hat, die gelenkig miteinander verbunden sind und miteinander verbundene Flüssigkeitskanäle aufweisen und von denen ein Gelenkteil einen Schlauchnippel trägt und am anderen Gelenkteil ein Innen- oder Außengewinde vorgesehen ist, das mit einem Außen- oder Innengewinde am Wasserauslauf verschraubbar ist, wobei das erste Gelenkteil mit einem kugeligen Stirnendbereich seiner Wandung zwischen einer formangepassten Gelenkpfanne am zweiten Gelenkteil einerseits und einem Gelenkkopf an einem in einer Innenhöhlung des ersten Gelenkteiles vorgesehenen Halteelement andererseits verschwenkbar gehalten ist, wobei das Halteelement mit einem Verbindungsschaft eine Durchstecköffnung des ersten Gelenkteiles durchsetzt und die Flüssigkeitskanäle des ersten Gelenkteiles sowie des zweiten Gelenkteiles miteinander verbindet.

Es sind bereits verschiedene Wasserauslauf-Garnituren mit einem handhabbaren Wasserauslauf vorbekannt. Dieser Wasserauslauf kann beispielsweise als Handbrause oder dergleichen flexibel handhabbarer Wasserauslauf ausgestaltet sein.

Handbrausen, die als Dusch- oder als Küchenbrausen eingesetzt werden können, sind bereits in verschiedenen Ausführungen bekannt. Die vorbekannten Handbrausen sind regelmäßig über eine Schraubkupplung mit einer flexiblen Schlauchleitung verbunden, die ihrerseits an das Wasserleitungsnetz angeschlossen ist. Die vorbekannten Handbrausen weisen meist einen Brausegriff auf, der an seinem, einem Brausekopf abgewandten Endbereich und als Schlauchanschluss ausgebildeten Endbereich ein Außengewinde trägt. An der Schlauchleitung ist ein Schlauchanschluss-Gegenstück vorgesehen, das mittels einer, ein Innengewinde tragenden Überwurfmutter am Außengewinde des an der Handbrause vorgesehenen Schlauchanschlusses festgeschraubt werden kann.

Die bei den vorbekannten Handbrausen zwischen Brausegriff und Schlauchleitung vorgesehene Schraubverbindung lässt jedoch ein Verdrehen der Handbrause in Bezug auf die Längsachse der Schlauchleitung nicht ohne weiteres zu, weil andernfalls die Schraubverbindung zwischen der Handbrause und der Schlauchleitung sich unbeabsichtigt lösen und undicht werden kann. Die vorbekannten Handbrausen zeigen auch regelmäßig nahe der Einspann- oder Kupplungsstelle zum Brausegriff einen Verschleiß durch Biegeüberlastung quer zur Längsachse, die durch die Bewegung der Handbrause während der Benutzung verursacht wird.

In Fig. 7 der wo 2004/007854 A1 ist eine Wasserauslauf-Garnitur mit einem Armaturenkörper dargestellt, an dem eine Handbrause lösbar befestigt werden kann. Der Armaturenkörper weist dazu ein, über ein Spülbecken gebogenes Auslaufrohr auf, an dem die Handbrause lösbar gehalten ist. Die Handbrause ist mit dem Wasserzulauf über eine flexible Schlauchleitung verbunden, die im Halterohr derart verschieblich geführt ist, dass die Handbrause aus einer am Halterohr befindlichen Gebrauchsstellung gelöst und anschließend frei benutzt werden kann. Zwischen der Handbrause und der flexiblen Schlauchleitung ist eine Kupplung vorgesehen, die ein Kugelgelenk aufweist. Dabei ist eine mit dem Schlauch verbundene Gelenkkugel in einer Gelenkpfanne beweglich gelagert, die an dem dem Brausekopf abgewandten Ende der Handbrause vorgesehen ist. Die Gelenkpfanne ist in einer Schraubhülse angeordnet, die mit einem am Hülseninnenumfang vorgesehenen Innengewinde in ein Außengewinde an der Handbrause verschraubt werden kann. Durch die auf das Kugelgelenk ausgeübten Drehbewegungen besteht jedoch die Gefahr, dass sich die Schraubhülse löst und damit auch das Kugelgelenk lockert.

Aus der DE 20 2006 010 072 U1 ist eine Wasserauslaufgarnitur mit einem handhabbaren Wasserauslauf vorbekannt. Der Wasserauslauf ist mit einer flexiblen Schlauchleitung über eine Kupplung verbindbar, die ein Kugelgelenk aufweist. Das Kugelgelenk hat ein erstes und ein zweites Gelenkteil, die gelenkig miteinander verbunden sind. Während das eine Gelenkteil einen Schlauchnippel trägt, ist am anderen Gelenkteil ein Innen- oder Außengewinde vorgesehen, das mit einem korrespondierenden Außen- oder Innengewinde am Wasserauslauf verschraubbar ist. Das erste Gelenkteil weist einen kugeligen Stirnendbereich auf. Am zweiten Gelenkteil ist eine formangepasste Gelenkpfanne vorgesehen. Erstes und zweites Gelenkteil sind so voneinander beabstandet, dass in dem zwischen den Gelenkteilen verbleibenden Zwischenraum der schalenförmige Gelenkkopf eines Halteelements aufgenommen ist. Dieses Halteelement weist einen Verbindungsschaft auf, der eine Durchstecköffnung des zweiten Gelenkteiles durchsetzt und mit seinem freien Schaftende an einem zuströmseitig vorgelagerten Bestandteil der vorbekannten Wasserauslaufgarnitur verschraubt ist.

Aus der WO 2008/067 879 A1 kennt man bereits eine Wasserauslaufarmatur, die an dem Wasserauslauf ihres Armaturenkörpers ein Kugelgelenk hat, das ein erstes und ein zweites Gelenkteil aufweist. Diese Gelenkteile sind gelenkig miteinander verbunden und weisen miteinander verbundene Flüssigkeitskanäle auf. Dabei ist das erste Gelenkteil mit einem kugeligen Stirnendbereich seiner Wandung zwischen einer formangepassten Gelenkpfanne am zweiten Gelenkteil einerseits und einem Gelenkkopf an einem in einer Innenhöhlung des ersten Gelenkteiles vorgesehenen Halteelement andererseits verschwenkbar gehalten. Das Halteelement, das mit einem am zweiten Gelenkteil angreifenden Verbindungsschaft eine Durchstecköffnung des ersten Gelenkteiles durchsetzt und mit Hilfe eines am freien Schaftende des Verbindungsschaftes vorgesehenen Außengewinde in einem Innengewinde am zweiten Gelenkteil angreift, verbindet die Flüssigkeitskanäle des ersten Gelenkteiles und des zweiten Gelenkteiles miteinander. An dem kugeligen Stirnendbereich des ersten Gelenkteiles schließt sich ein hülsenförmiger Teilbereich an, in dessen Hülseninnenraum ein Strahlregler einsetzbar ist, der das aus der Auslaufarmatur ausströmende Wasser zu einem homogenen, nicht-spritzenden und gegebenenfalls auch perlend-weichen Wasserstrahl formen soll.

Wasserauslauf-Garnituren mit Kupplungen, die im Bereich einer Handbrause und einer flexiblen Schlaufleitung ein Kugelgelenk aufweisen, sind auch aus der WO 2007/090 311 A2 vorbekannt. Auch bei diesen, ein Kugelgelenk aufweisenden Kupplungen ist jedoch eine Schraubverbindung vorgesehen, die die oben erwähnten Nachteile beinhaltet.

Es besteht daher insbesondere die Aufgabe, eine Wasserauslauf-Garnitur der eingangs erwähnten Art zu schaffen, die sich durch eine größere Beweglichkeit und insbesondere auch durch eine Verdrehbarkeit zwischen Wasserauslauf und Schlauchleitung auszeichnet, ohne dass durch diese Verdrehbarkeit die Gefahr besteht, dass sich das Kugelgelenk mit der Zeit lockert.

Die erfindungsgemäße Lösung dieser Aufgabe besteht bei der Wasserauslauf-Garnitur der eingangs erwähnten Art in den Merkmalen des geltenden Patentanspruchs 1.

Die erfindungsgemäße Wasserauslauf-Garnitur hat eine Kupplung, welche den mittels der Schlauchleitung flexibel handhabbaren Wasserauslauf mit der Schlauchleitung verbindet. Diese, zur Verbindung von Wasserauslauf und Schlauchleitung bestimmte Kupplung weist ein Kugelgelenk auf. Das zwischen Wasserauslauf und Schlauchleitung zwischengeschaltete Kugelgelenk erhöht nicht nur die Beweglichkeit und Gelenkigkeit zwischen dem Wasserauslauf und der flexiblen Schlauchleitung, - das Kugelgelenk erlaubt vielmehr auch ein Verdrehen des wasserauslaufs relativ zur Längsachse der Schlauchleitung, ohne dass ein Lösen der zwischen Wasserauslauf und Schlauchleitung vorgesehenen Schraubverbindung oder dergleichen Kupplung befürchtet werden müsste.

Die zur Verbindung von Wasserauslauf und Schlauchleitung vorgesehene Kupplung der erfindungsgemäßen Wasserauslauf-Garnitur weist ein Kugelgelenk auf, dass ein erstes und ein zweites Gelenkteil hat, die gelenkig miteinander verbunden sind und miteinander verbundene Flüssigkeitskanäle aufweisen, wobei eines der Gelenkteile einen Schlauchnippel trägt und am anderen Gelenkteil ein Innen- oder Außengewinde zur Montage mit dem handhabbaren Wasserauslauf vorgesehen ist. Dabei ist das erste Gelenkteil mit einem kugeligen Stirnendbereich seiner Wandung zwischen einer formangepassten Gelenkpfanne am zweiten Gelenkteil einerseits und einem Gelenkkopf an einem, in einer Innenhöhlung des ersten Gelenkteiles vorgesehenen Halteelement andererseits verschwenkbar gehalten. Das Halteelement durchsetzt mit einem am zweiten Gelenkteil angreifenden Verbindungsschaft eine Durchstecköffnung des ersten Gelenkteiles und verbindet die Flüssigkeitskanäle des ersten Gelenkteiles sowie des zweiten Gelenkteiles miteinander. Dabei ist das Halteelement mit dem zweiten Gelenkteil über eine Rastverbindung verbindbar. Da bei der erfindungsgemäßen Wasserauslauf-Garnitur das Halteelement mit dem zweiten Gelenkteil über eine Rastverbindung verbindbar ist, können die Bauelemente des in die zwischen Wasserauslauf und Schlauchleitung vorgesehene Kupplung integrierten Kugelgelenks auf einfache Weise montiert werden. Bei der erfindungsgemäßen Wasserauslauf-Garnitur müssen das Halteelement und zweite Gelenkteil lediglich ineinander gesteckt werden, um das in die Kupplung integrierte Kugelgelenk zu montieren. Durch bloßes axiales zusammenstecken und Zusammendrücken von Halteelement und zweitem Gelenkteil lässt sich das in die Kupplung integrierte Kugelgelenk auf einfache Weise rasch montieren. Eine solche Rastverbindung erlaubt im Vergleich zu einer Schraubverbindung eine wesentlich bessere Zentrierung des Halteelements im zweiten Gelenkteil, was die Leichtgängigkeit des Kugelgelenks begünstigen und größere Bauteiltoleranzen in diesem Bereich ermöglichen kann. Da die Rastverbindung ohne eine insbesondere klebende Gewindesicherung auskommt, können auch besondere, bei derartigen Klebeverbindungen erforderliche Zulassungen vermieden werden, wie sie beispielsweise im Trinkwasserbereich aus hygienischen Gründen vorgeschrieben sein können. Eine zusätzliche Abdichtung auch im Bereich der Rastverbindung ist nicht erforderlich. Die Rastverbindung kommt mit einer einfachen Ringdichtung aus, die am oberen freien Stirnrand des Halteelements zwischen Halteelement und zweitem Gelenkteil angeordnet und insbesondere eingespannt werden kann.

Das in der erfindungsgemäß ausgestalteten Kupplung vorgesehene Kugelgelenk weist zwei gelenkig miteinander verbundene Gelenkteile auf, von denen ein erstes Gelenkteil einen kugelkalotten- beziehungsweise kugelsegmentförmigen oder dergleichen kugeligen Stirnendbereich hat. Dabei ist das erste Gelenkteil mit seinem stirnseitigen und kugelig ausgestalteten Stirnendbereich zwischen einer formangepassten Gelenkpfanne am zweiten Gelenkteil einerseits und einem Gelenkkopf an einem in der Innenhöhlung des ersten Gelenkteiles vorgesehenen Halteelement andererseits verschwenkbar gehalten. Da das erste Gelenkteil somit zwischen dem zweiten Gelenkteil und dem Halteelement sicher und fast gehalten ist und da das erste Gelenkteil nicht bloß mit einem Dichtring gesichert wird, verfügt das Kugelgelenk über eine vergleichsweise hohe Funktionalität, da die Halte- und die Dichtfunktion getrennt voneinander sind und jeweils für sich optimiert werden können. Es ist ein besonderer Vorteil dieser weiterbildenden Ausführungsform, dass auch die Haltefunktion einerseits und die Verdrehbarkeit andererseits getrennt voneinander sind, so dass der Wasserauslauf gegenüber der Schlauchleitung verdreht werden kann, ohne dass ein unbeabsichtigtes Lösen einer im Bereich der Kupplung vorgesehenen Schraubverbindung zu befürchten ist. Da das erste Gelenkteil, das auf der Zuströmseite oder der Abströmseite des Kugelgelenks angeordnet sein kann, in eine Gelenkpfanne des zweiten Gelenkteiles verschwenkbar angeordnet ist, können erstes Gelenkteil und zweites Gelenkteil ohne größere Übergänge und insbesondere ohne ästhetisch störende Durchmessersprünge miteinander verbunden werden. Dabei durchsetzt das Halteelement mit einem am zweiten Gelenkteil angreifenden Verbindungsschaft eine Durchstecköffnung des ersten Gelenkteiles, wobei das Halteelement die Flüssigkeitskanäle des ersten Gelenkteiles sowie des zweiten Gelenkteiles miteinander verbindet.

Um das Kugelgelenk möglichst platzsparend in die zwischen dem Wasserauslauf und der Schlauchleitung vorgesehene Kupplung integrieren zu können, ist es vorteilhaft, wenn das eine und vorzugsweise das erste Gelenkteil eine abströmseitige Kupplungsöffnung mit Innengewinde hat, in welches Innengewinde ein am wasserauslauf vorgesehenes Außengewinde einschraubbar ist.

Dabei sieht eine bevorzugte Ausführungsform gemäß der Erfindung vor, dass sich an dem kugeligen Stirnendbereich des ersten Gelenkteiles ein hülsenförmiger Teilbereich anschließt, der in seinem stirnseitig offenen Hülseninnenraum das Innengewinde trägt.

Zweckmäßig ist es, wenn das zweite Gelenkteil den Schlauchnippel trägt.

Bei der erfindungsgemäß verwendeten Rastverbindung kann es vorteilhaft sein, wenn das Halteelement außenumfangsseitig eine Ringnut hat, in welcher Ringnut ein einfederbarer Splint- oder Sicherungsring vorgesehen ist, der in seinem, in Gebrauchsstellung der Steck- und/oder Rastverbindung ausgefedertem zustand in eine Sicherungsnut am Innenumfang des zweiten Gelenkteiles vorsteht.

Um im Bereich zwischen den Gelenkteilen gut abdichten zu können, ist es zweckmäßig, wenn zumindest eine Ringdichtung vorgesehen ist, die zwischen dem ersten und dem zweiten Gelenkteil oder zwischen dem Halteelement und dem ersten Gelenkteil wirksam ist.

Zweckmäßig kann es sein, wenn am Außenumfang des Halteelements, am Innen- oder Außenumfang des ersten Gelenkteiles und/oder am Innenumfang des zweiten Gelenkteiles im Bereich der Gelenkpfanne eine Ringnut zur Aufnahme einer Ringdichtung vorgesehen ist.

Ein Anwendungsbeispiel sieht vor, dass der Wasserauslauf-Garnitur eine Auslaufarmatur mit einem Auslaufrohr zugeordnet ist, in welchem Auslaufrohr die mit dem Wasserauslauf verbundene Schlauchleitung vorzugsweise gegen eine Rückstellkraft ausziehbar geführt ist.

Dabei ist es besonders vorteilhaft, wenn der Wasserauslauf in einer Bereitschaftsstellung am Auslaufrohr derart gehalten ist, dass die Kupplung zwischen dem Wasserauslauf und Schlauchleitung im Rohrinneren des Auslaufrohres angeordnet ist.

Weiterbildungen gemäß der Erfindung ergeben sich aus der Beschreibung in Verbindung mit der Zeichnung und den Ansprüchen. Nachstehend wird die Erfindung anhand eines vorteilhaften Ausführungsbeispieles noch näher beschrieben.

Es zeigt:
- Fig. 1: eine teilweise aufgeschnitten dargestellte Küchenbrausearmatur, an der ein als Handbrause ausgestalteter Wasserauslauf mittels eines Pull-Down-Auszuges gehalten und über eine flexible Schlauchleitung an das Wasserleitungsnetz angeschlossen ist, wobei der als Handbrause ausgebildete Wasserauslauf und die damit verbundene flexible Schlauchleitung eine Wasserauslauf-Garnitur bilden, und
- Fig. 2: ein Schlauchanschluss-Gegenstück der in Fig. 1 gezeigten Wasserauslauf-Garnitur in einem Teil-Längsschnitt.

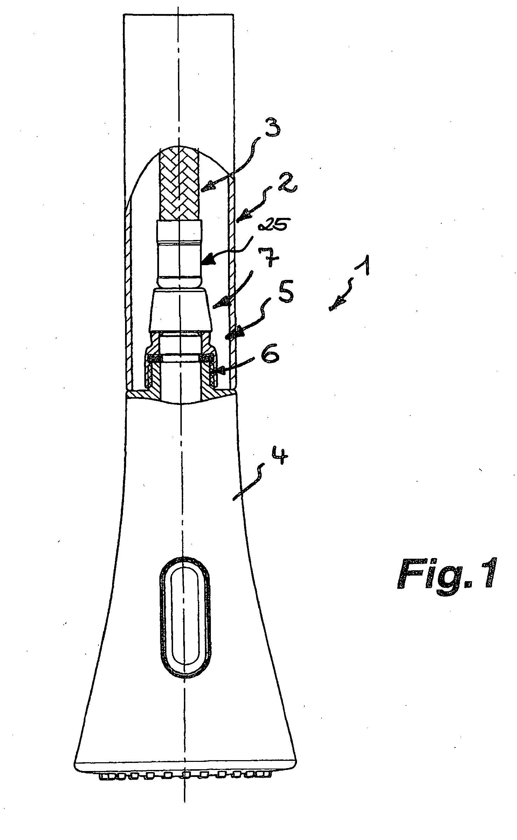

In Fig. 1 ist eine Küchenbrausearmatur 1 dargestellt, die ein Auslaufrohr 2 hat. In dem Auslaufrohr 2 ist eine flexible Schlauchleitung 3 gegen eine Rückstellkraft ausziehbar geführt, die an ihrem abströmseitigen Schlauchleitungsende mit einem Wasserauslauf 4 verbunden ist. Der Wasserauslauf 4, der mittels der Schlauchleitung 3 flexibel handhabbar ist, ist hier als Handbrause ausgebildet. Um das Schlauchleitungsende mit dem Wasserauslauf 4 zu verbinden, ist eine Kupplung 5 vorgesehen. Der hier als Handbrause ausgebildete Wasserauslauf 4 und die über die Kupplung 5 mit dem Wasserauslauf 4 verbundene Schlauchleitung 3 sind Bestandteil einer Wasserauslauf-Garnitur.

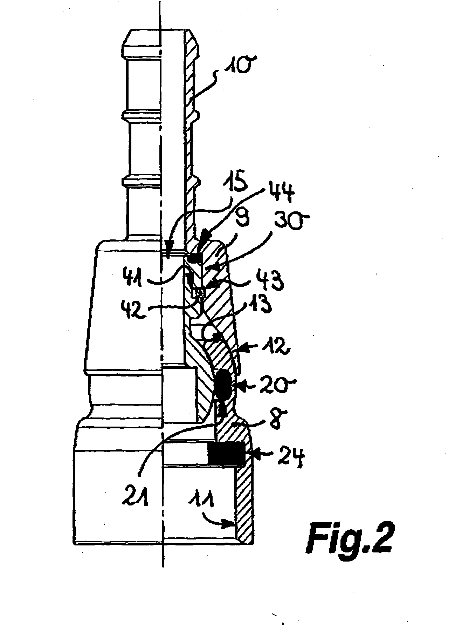

Aus Fig. 1 wird deutlich, dass die zur Verbindung von Wasserauslauf 4 und Schlauchleitung 3 vorgesehene Kupplung 5 hier einen Schlauchanschluss mit Außengewinde 6 hat, welches Außengewinde 6 an einem Schlauchanschluss-Gegenstück der Schlauchleitung 3 lösbar verbindbar ist. Dabei weist das in Figur 2 in einem Teil-Längsschnitt näher dargestellte Schlauchanschluss-Gegenstück ein Kugelgelenk 7 auf. Das Kugelgelenk 7 hat ein erstes und ein zweites Gelenkteil 8, 9, die gelenkig miteinander verbunden sind und miteinander verbundene Flüssigkeitskanäle aufweisen, während das zweite Gelenkteil 9 an seinem dem ersten Gelenkteil 8 abgewandten Stirnende einen Schlauchnippel 10 trägt, weist das erste Gelenkteil 8 einen hülsenförmigen Teilbereich auf, der in seinem stirnseitig offenen Hülseninnenraum das Innengewinde 11 trägt. In das Innengewinde 11 des ersten Gelenkteiles 8 kann das am Wasserauslauf 4 vorgesehene Außengewinde 6 lösbar eingeschraubt werden. Dabei beaufschlagt der dem Gelenkteil 8 zugewandte Stirnrand des Wasserauslaufs 4 einen Dichtring 24 im Hülseninnenraum des Gelenkteiles 8 axial dichtend.

Das der Kupplung 5 zugewandte Schlauchende der Schlauchleitung 3 ist auf den Nippel 10 aufgeschoben und dort mittels einer Quetschhülse 25 sicher und fest gehalten.

Aus Figur 2 ist erkennbar, dass das erste Gelenkteil 8 mit einem kugelkalotten- beziehungsweise kugelsegmentförmigen oder dergleichen kugeligen Stirnendbereich 12 seiner Wandung zwischen einer formangepassten Gelenkpfanne 13 am zweiten Gelenkteil 9 einerseits und einem Gelenkkopf 14 an einem in der Innenhöhlung des ersten Gelenkteiles 8 vorgesehenen Halteelement 15 andererseits verschwenkbar gehalten ist. Das Halteelement 15 durchsetzt mit einem am zweiten Gelenkteil 9 angreifenden Verbindungsschaft 30 eine Durchstecköffnung 31 des ersten Gelenkteiles 8 und verbindet die Flüssigkeitskanäle des ersten Gelenkteiles 8 sowie des zweiten Gelenkteiles 9 miteinander.

An den kugeligen Stirnendbereich 12 des ersten Gelenkteiles 8 schließt sich abströmseitig der hülsenförmige Teilbereich an, der in seinem Hülseninnenraum das Innengewinde 11 trägt.

In dem in Fig.2 gezeigten Ausführungsbeispiel ist das Halteelement 15 mit dem zweiten Gelenkteil 9 über eine Steck- und Rastverbindung mit dem zweiten Gelenkteil 9 verbindbar. Das Halteelement 15 weist außenumfangsseitig eine vorzugsweise im Bereich des Verbindungsschaftes 30 vorgesehene Ringnut 41 auf, in welcher Ringnut 41 ein einfederbarer Splint- oder Sicherungsring 42 vorgesehen ist, der in seinem, in Gebrauchsstellung der Steck- und Rastverbindung ausgefedertem Zustand in eine Sicherungsnut 43 am Innenumfang des zweiten Gelenkteiles 9 vorsteht. In Fig.2 ist gut erkennbar, dass zwischen dem freien Stirnende des Halteelements 15 und dem zweiten Gelenkteil 9 ein insbesondere axial dichtender Dichtring 44 eingespannt ist. Die Steck- und Rastverbindung des in Fig.2 gezeigten Ausführungsbeispieles erlaubt eine schnelle und einfache Montage des Halteelements 15 im zweiten Gelenkteil 9, da nur ein axiales Zusammenstecken und Zusammendrücken dieser Bestandteile der Kupplung 5 notwendig ist. Im Vergleich zu einer Schraubverbindung zeichnet sich die in Fig.2 dargestellte Steck- und Rastverbindung durch eine bessere Zentrierung des Halteelements 15 im zweiten Gelenkteil 9 aus, was für die Leichtgängigkeit der Kupplung 5 förderlich ist und größere Bauteil-Toleranzen erlaubt. Da auf die zur Unterbringung eines Dichtrings 23 erforderliche Ringnut verzichtet werden kann und da stattdessen lediglich der axial dichtende Dichtring 44 zwischen Halteelement 15 und Gelenkteil 9 eingespannt wird, wird die einfache Herstellung und Montage der Kupplung 5 noch zusätzlich begünstigt.

In Fig.2 ist gut erkennbar, dass zwischen dem Halteelement 15 und dem ersten Gelenkteil 8 zumindest eine Ringdichtung 20 vorgesehen ist. Diese Ringdichtung 20 ist zwischen dem ersten Gelenkteil 8 und dem Halteelement 15 wirksam. Dazu ist am Innenumfang des ersten Gelenkteiles 8 eine Ringnut 21 zur Aufnahme der Ringdichtung 20 vorgesehen.

In Fig. 1 ist der Wasserauslauf 4 in einer Bereitschaftsstellung dargestellt, in welcher Bereitschaftsstellung der Wasserauslauf 4 derart am Auslaufrohr 2 gehalten ist, dass die Kupplung 5 zwischen dem Wasserauslauf 4 und der Schlauchleitung 3 vollständig im Rohrinneren des Auslaufrohres 2 verdeckt angeordnet ist. Da das in die Kupplung 5 integrierte Kugelgelenk 7 nicht nur eine Verschwenkbarkeit, sondern auch eine Verdrehbarkeit des Wasserauslaufs 4 relativ zur Längsachse der Schlauchleitung 3 gewährleistet, zeichnet sich der mit der Schlauchleitung 3 verbundene wasserauslauf 4 durch eine hohe Gelenkigkeit und Verdrehbarkeit aus, ohne dass ein unbeabsichtigtes Lösen der zwischen Wasserauslauf 4 und Schlauchleitung 3 vorgesehenen Schraubverbindung zu befürchten wäre, und ohne dass es zu den üblichen handgriffnahen Schlauchschädigungen durch Bewegungeüberlastungen kommt.

Es ist ein besonderer Vorteil des in Fig.2 näher dargestellten Ausführungsbeispieles, dass die Haltefunktion einerseits und die Verdrehbarkeit andererseits getrennt voneinander sind, sodass der Wasserauslauf 4 gegenüber der Schlauchleitung 3 verdreht werden kann, ohne dass ein unbeabsichtigtes Lösen einer im Bereich der Kupplung 5 vorgesehenen Schraubverbindung zu befürchten ist. Bei dem beispielsweise in Fig.2 näher dargestellten Anschluss kann der am Wasserauslauf 4 vorgesehene Schlauchanschluss fest am ersten Gelenkteil 8 verschraubt werden, um beispielsweise bei einem schlechten Dichtring 24 dennoch eine ausreichende Abdichtung zu erreichen, ohne dass dies sich auf die Beweglichkeit das Kugelgelenks 7 gemäß Fig. 9 nachteilig auswirken würde.

In Fig.2 ist dargestellt, dass der am Halteelement 15 vorgesehene Gelenkkopf 14 eine kugelsegmentförmige oder dergleichen kugelige Außenkontur hat. Aus Fig.2 wird deutlich, dass die zur Aufnahme der Ringdichtung 20 bestimmte Ringnut 21 am Innenumfang des ersten Gelenkteils 8 in Relation zum Halteelement 15 annähernd derart im Bereich des Äquators oder des größten Außenumfangs der kugeligen Außenkontur des am Halteelement 15 vorgesehenen Gelenkkopfes 14 angeordnet ist, dass diese Ringdichtung 20 nur einer radialen Belastung -, nicht aber einer axialen Belastung ausgesetzt ist, und dass die Ringdichtung 20 daher nur geringen Reibkräften unterliegt. Durch diese besondere Anordnung der Ringdichtung 20 bei dem in Fig.2 gezeigten Ausführungsbeispiel unterliegt die Ringdichtung 20 auch bei höheren Drücken geringeren Reibkräften und eine leichtgängige Verschwenkbarkeit des ersten Gelenkteiles 8 in Relation zum zweiten Gelenkteil 9 sowie zum Halteelement 15 wird nahezu druckunabhängig gewährleistet. Da die im Bereich des Äquators angeordnete Nut praktisch rechteckig in den Innenumfang des ersten Gelenkteiles 8 eingearbeitet werden kann, ist diese Nut 21 einfacher herzustellen und auszumessen. Aus Fig.2 wird deutlich, dass das Halteelement 15 bei dem in Fig.2 gezeigten Ausführungsbeispiel länger ausgebildet und die Reib- und Kontaktfläche des ersten Gelenkteiles 8 am Haltelement 15 einerseits und am zweiten Gelenkteil 9 andererseits entsprechend größer ausgestaltet werden kann; da die Ringdichtung 20 im Bereich des Äquators oder des größten Außenumfangs der kugeligen Außenkontur des am Halteelement 15 vorgesehenen Gelenkkopfes 14 angeordnet ist, wird die Ringdichtung 20 nur noch in radialer Richtung mit der Folge belastet, dass dadurch der Verschleiß der Ringdichtung 20 reduziert werden kann.

## Patentansprüche

1. Wasserauslauf-Garnitur mit einem handhabbaren Wasserauslauf (4) sowie mit einer flexiblen Schlauchleitung (3), die über eine Kupplung (5) mit dem Wasserauslauf (4) verbindbar ist, die ein Kugelgelenk (7) aufweist, das ein erstes und ein zweites Gelenkteil (8, 9) hat, die gelenkig miteinander verbunden sind und miteinander verbundene Flüssigkeitskanäle aufweisen und von denen ein Gelenkteil (9) einen Schlauchnippel (10) trägt und am anderen Gelenkteil (8) ein Innen- oder Außengewinde (11) vorgesehen ist, das mit einem Außen- oder Innengewinde (6) am Wasserauslauf (4) verschraubbar ist, wobei das erste Gelenkteil (8) mit einem kugeligen Stirnendbereich (12) seiner Wandung zwischen einer formangepassten Gelenkpfanne (13) am zweiten Gelenkteil (9) einerseits und einem Gelenkkopf (14) an einem in einer Innenhöhlung des ersten Gelenkteiles (8) vorgesehenen Halteelement (15) andererseits verschwenkbar gehalten ist, wobei das Halteelement (15) mit einem Verbindungsschaft (16) eine Durchstecköffnung (17) des ersten Gelenkteiles (8) durchsetzt und die Flüssigkeitskanäle des ersten Gelenkteiles (8) sowie des zweiten Gelenkteiles (9) miteinander verbindet, **dadurch gekennzeichnet, dass** der Verbindungsschaft (16) des Halteelementes (15) am zweiten Gelenkteil (9) angreift, und dass das Halteelement (15) mit dem zweiten Gelenkteil (9) über eine Rastverbindung verbindbar ist.

2. Wasserauslauf-Garnitur nach Anspruch 1, **dadurch gekennzeichnet, dass** eines der Gelenkteile (8, 9) und vorzugsweise das erste Gelenkteil (8) eine abströmseitige und das Innengewinde (11) aufweisende Kupplungsöffnung hat.

3. Wasserauslauf-Garnitur nach Anspruch 2, **dadurch gekennzeichnet, dass** sich an dem kugeligen Stirnendbereich (12) des ersten Gelenkteiles (8) ein hülsenförmiger Teilbereich anschließt, der in seinem stirnseitig offenen Hülseninnenraum das Innengewinde (11) trägt.

4. Wasserauslauf-Garnitur nach Anspruch 2 oder 3, **dadurch gekennzeichnet, dass** das zweite Gelenkteil (9) den Schlauchnippel (10) trägt.

5. Wasserauslauf-Garnitur nach einem der Ansprüche 1 bis 4, **dadurch gekennzeichnet, dass** das Halteelement (15) außenumfangsseitig eine Ringnut (41) hat, in welcher Ringnut (41) ein einfederbarer Splint- oder Sicherungsring (42) vorgesehen ist, der in seinem, in Gebrauchsstellung der Rastverbindung ausgefedertem Zustand in eine Sicherungsnut (43) am Innenumfang des zweiten Gelenkteiles (9) vorsteht.

6. Wasserauslauf-Garnitur nach einem der Ansprüche 1 bis 5, **dadurch gekennzeichnet, dass** zumindest eine Ringdichtung (20) vorgesehen ist, die zwischen dem ersten und dem zweiten Gelenkteil (8, 9) oder zwischen dem Halteelement (15) und dem ersten Gelenkteil (8) wirksam ist.

7. Wasserauslauf-Garnitur nach Anspruch 5, **dadurch gekennzeichnet, dass** am Außenumfang des Halteelements (15), am Innen- oder Außenumfang des ersten Gelenkteiles (9) oder am Innenumfang des zweiten Gelenkteiles (9) im Bereich der Gelenkpfanne (13) eine Ringnut (21) vorgesehen ist, in der die Ringdichtung (20) aufgenommen ist.

8. Wasserauslauf-Garnitur nach einem der Ansprüche 3 bis 7, **dadurch gekennzeichnet, dass** zwischen dem freien Stirnende des Halteelements (15) und dem zweiten Gelenkteil (9) ein insbesondere axial dichtender Dichtring (44) vorgesehen ist.

9. Wasserauslauf-Garnitur nach Anspruch 8, **dadurch gekennzeichnet, dass** der Gelenkkopf (14) des Halteelements (15) eine kugelige Außenkontur hat und dass die am Außenumfang des Halteelements (15) oder am Innenumfang des ersten Gelenkteiles (8) vorgesehene Ringnut (21) relativ zueinander zumindest annähernd im Bereich des Äquators oder des größten Außenumfangs der kugeligen Außenkontur des Gelenkkopfes (14) am Halteelement (15) oder am ersten Gelenkteil (8) angeordnet ist.

## Claims

1. Water outlet fitting having a handlable water outlet (4) and having a flexible hose line (3) which can be connected to the water outlet (4) via a coupling (5), which has a ball joint (7) which has a first and a second joint part (8, 9) which are connected to one another in an articulated manner and comprise mutually connected liquid channels and of which one joint part (9) bears a hose nipple (10) and on the other joint part (8) an internal or external thread (11) is provided which can be screwed with an external or internal thread (6) on the water outlet (4), wherein the first joint part (8) with a spherical end region (12) of its wall is held so as to be able to pivot between a conformed joint socket (13) on the second joint part (9) on the one hand and a joint head (14) on a holding element (15) provided in an internal hollow of the first joint part (8) on the other hand, wherein the holding element (15) passes with a connecting shaft (16) through a through opening (17) in the first joint part (8), and the liquid channels of the first joint part (8) and of the second joint part (9) are connected to one another, **characterised in that** the connecting shaft (16) of the holding element (15) engages on the second joint part (9), and that the holding element (15) can be connected to the second joint part (9) via a latch connection.

2. Water outlet fitting as claimed in claim 1, **characterised in that** one of the joint parts (8, 9) and preferably the first joint point (8) has a downstream coupling opening comprising the internal thread (11).

3. Water outlet fitting as claimed in claim 2, **characterised in that** a sleeve-like partial region adjoins the spherical end region (12) of the first joint part (8) and bears the internal thread (11) in its internal sleeve space which is open at the end face.

4. Water outlet fitting as claimed in claim 2 or 3, **characterised in that** the second joint part (9) bears the hose nipple (10).

5. Water outlet fitting as claimed in any one of claims 1 to 4, **characterised in that** the holding element (15) has an annular groove (41) on its outer periphery, in which annular groove (41) is provided a cotter ring or securing ring (42) which can spring inwards and which, in its outwardly sprung condition in the usage position of the latch connection, protrudes into a securing groove (43) on the inner periphery of the second joint part (9).

6. Water outlet fitting as claimed in any one of claims 1 to 5, **characterised in that** at least one annular seal (20) is provided which acts between the first and the second joint part (8, 9) or between the holding element (15) and the first joint part (8).

7. Water outlet fitting as claimed in claim 5, **characterised in that** on the outer periphery of the holding element (15), on the inner or outer periphery of the first joint part (9) or on the inner periphery of the second joint part (9) in the region of the joint socket (13), an annular groove (21) is provided in which the annular seal (20) is received.

8. Water outlet fitting as claimed in any one of claims 3 to 7, **characterised in that** between the free end of the holding element (15) and the second joint part (9) an - in particular - axially sealing sealing ring (44) is provided.

9. Water outlet fitting as claimed in claim 8, **characterised in that** the joint head (14) of the holding element (15) has a spherical outer contour and that the annular groove (21) provided on the outer periphery of the holding element (15) or on the inner periphery of the first joint part (8), relative to one another, is disposed at least approximately in the region of the equator or of the largest outer periphery of the spherical outer contour of the joint head (14) on the holding element (15) or on the first joint part (8).

## Revendications

1. Garniture de bec avec un bec manipulable (4) ainsi qu'avec un tuyau flexible (3), qui peut être relié au bec (4) par un raccord (5) qui présente une rotule (7), qui comprend une première et une deuxième parties de rotule (8, 9), qui sont assemblées de façon articulée l'une à l'autre et qui présentent des canaux de liquide raccordés l'un à l'autre, et dont une partie de rotule (9) porte un connecteur de tuyau (10) et il est prévu sur l'autre partie de rotule (8) un filet intérieur ou extérieur (11), qui peut être vissé sur un filet extérieur ou intérieur (6) sur le bec (4), dans laquelle la première partie de rotule (8) est maintenue de façon pivotante avec une région d'extrémité frontale sphérique (12) de sa paroi entre une cuvette de rotule (13) de forme adaptée sur la deuxième partie de rotule (9) d'une part et une tête de rotule (14) sur un élément de maintien (15) prévu dans une cavité intérieure de la première partie de rotule (8) d'autre part, dans laquelle l'élément de maintien (15) traverse avec une tige de liaison (16) une ouverture de passage (17) de la première partie de rotule (8) et relie l'un à l'autre les canaux de liquide de la première partie de rotule (8) et de la deuxième partie de rotule (9), **caractérisée en ce que** la tige de liaison (16) de l'élément de maintien (15) s'applique sur la deuxième partie de rotule (9) et **en ce que** l'élément de maintien (15) peut être assemblé à la deuxième partie de rotule (9) par encliquetage.

2. Garniture de bec selon la revendication 1, **caractérisée en ce qu'**une des parties de rotule (8, 9) et, de préférence, la première partie de rotule (8) comporte une ouverture de raccord côté aval et présentant le filet intérieur (11).

3. Garniture de bec selon la revendication 2, **caractérisée en ce qu'**une région partielle en forme de manchon, qui porte le filet intérieur (11) dans son espace intérieur de manchon ouvert côté frontal, se raccorde à la région d'extrémité frontale sphérique (12) de la première partie de rotule (8).

4. Garniture de bec selon la revendication 2 ou 3, **caractérisée en ce que** la deuxième partie de rotule (9) porte le connecteur de tuyau (10).

5. Garniture de bec selon l'une quelconque des revendications 1 à 4, **caractérisée en ce que** l'élément de maintien (15) comporte en périphérie extérieure une rainure annulaire (41), rainure annulaire (41) dans laquelle il est prévu une bague élastique fendue ou de fixation (42) qui, dans son état expansé dans la position d'utilisation de l'assemblage encliqueté, sort dans une rainure de fixation (43) à la périphérie intérieure de la deuxième partie de rotule (9).

6. Garniture de bec selon l'une quelconque des revendications 1 à 5, **caractérisée en ce qu'**il est prévu au moins un joint torique (20) qui est actif entre la première et la deuxième parties de rotule (8, 9) ou entre l'élément de maintien (15) et la première partie de rotule (8).

7. Garniture de bec selon la revendication 5, **caractérisée en ce qu'**il est prévu à la périphérie extérieure de l'élément de maintien (15), à la périphérie intérieure ou extérieure de la première partie de rotule (8) ou à la périphérie intérieure de la deuxième partie de rotule (9), dans la région de la cuvette de rotule (13), une rainure annulaire (21) dans laquelle le joint torique (20) est logé.

8. Garniture de bec selon l'une quelconque des revendications 3 à 7, **caractérisée en ce qu'**il est prévu un joint torique étanche en particulier axialement entre l'extrémité frontale libre de l'élément de maintien (15) et la deuxième partie de rotule (9).

9. Garniture de bec selon la revendication 8, **caractérisée en ce que** la tête de rotule (14) de l'élément de maintien (15) présente un contour extérieur sphérique et **en ce que** la rainure annulaire (21) prévue à la périphérie extérieure de l'élément de maintien (15) ou à la périphérie intérieure de la première partie de rotule (8) est disposée l'une par rapport à l'autre au moins approximativement dans la région de l'équateur ou du plus grand périmètre extérieur du contour extérieur sphérique de la tête de rotule (14) sur l'élément de maintien (15) ou sur la première partie de rotule (8).
